# FASCICULE DE BREVET EUROPEEN

(11) **EP 4 242 550 B1**
(45) Date de publication et mention de la délivrance du brevet: **09.10.2024**
(21) Numéro de dépôt: 23181375.9
(22) Date de dépôt: 27.12.2016
(51) Int. Cl.: H02S 20/32, G05D 3/10, F24S 30/425, F24S 50/20

(54) **CHAMP SOLAIRE AVEC CENTRALE SOLAIRE DE RÉFÉRENCE POUR UNE GESTION AMÉLIORÉE**
SOLARZELLENFELD MIT EINEM REFERENZ-SOLARKRAFTWERK FÜR VERBESSERTES MANAGEMENT
SOLAR FIELD WITH REFERENCE SOLAR POWER PLANT FOR IMPROVED MANAGEMENT

(30) Priorité: 04.01.2016 FR 1650014
(43) Date de publication de la demande: 13.09.2023
(62) Demande divisionnaire de: 20179934.3
(73) Titulaire: Nextracker LLC, Fremont, CA 94555 (US)
(72) Inventeur: ARLIAUD, Jérôme, 83910 Pourrières (FR); MICHOTTE DE WELLE, Madyan, 13002 Marseille (FR)
(74) Mandataire: v. Bezold & Partner Patentanwälte - PartG mbB

(56) Documents cités:
- GB-A- 2 467 197
- US-A1- 2013 056 614
- US-A1- 2014 014 157

## Description

La présente invention se rapporte à un champ solaire comprenant une pluralité de modules solaires répartis en plusieurs rangées parallèles, ainsi qu'à un procédé de gestion d'un tel champ solaire.

Elle se rapporte plus particulièrement à un champ solaire dans lequel chaque module solaire comprend au moins un capteur solaire, notamment du type panneau photovoltaïque, porté par un suiveur solaire mono-axe, où chaque suiveur solaire est piloté en rotation autour d'un axe principal au moyen d'un actionneur pour une rotation du module solaire permettant de suivre le soleil lors de son élévation et de sa descente d'est en ouest.

L'invention concerne donc le domaine des champs solaires comprenant des suiveurs solaires, autrement appelés systèmes de support suiveur ou « solar tracker », répartis en rangées parallèles et supportant des capteurs solaires, où les suiveurs solaires sont du type mono-axe c'est-à-dire orientable selon un unique axe principal, pour une rotation permettant de suivre le soleil lors de son élévation et de sa descente d'est en ouest. Pour précision, un tel axe principal s'étend généralement horizontalement et sensiblement parallèlement au sol sur lequel le suiveur solaire est ancré.

Au sein d'une même rangée, les suiveurs solaires sont alignés, avec leurs axes principaux sensiblement confondus, généralement selon une direction nord-sud.

Dans un champ solaire classique, il est connu de prévoir une unité de pilotage de l'orientation angulaire des modules solaires, où l'unité de pilotage est reliée aux actionneurs pour asservir l'orientation angulaire des modules solaires en appliquant une consigne d'orientation commune à tous les modules solaires.

Cette consigne d'orientation commune est généralement établie sur la base d'un calcul astronomique de la position du soleil, pour un positionnement en temps réel en face du soleil, avec éventuellement des phases de mise à plat horizontal des capteurs solaires, en début et fin de journée. Cette consigne d'orientation commune dépend notamment de la date, car la position du soleil varie d'un jour à l'autre au fil des saisons. Un example d'un champ solaire dans l'état de la technique est décrit dans le document US 2013/056614 A1, qui décrit un champ solaire comprenant une pluralité de suiveur solaires comportant des unités de pilotage configurées pour calibrer les suiveurs plusieurs fois par jour.

Cependant, ce type d'asservissement basé uniquement sur base le calcul astronomique de la position du soleil, présente un inconvénient majeur en offrant un déficit de rendement dans certaines conditions météorologiques, et en particulier dans des conditions nuageuses qui sont causes d'un rayonnement solaire diffus. Le rayonnement solaire diffus se manifeste lorsque le rayonnement solaire direct se disperse dans les nuages et les particules atmosphériques. Le rayonnement solaire diffus résulte de la diffraction de la lumière par les nuages et les molécules diverses en suspension dans l'atmosphère. Le rayonnement solaire diffus ne suit donc pas nécessairement la direction définie par le soleil en direction du point d'observation à la surface de la Terre. Par conséquent, dans des conditions nuageuses, il peut être préférable, pour obtenir un rendement maximal au regard de ces conditions, d'orienter les suiveurs ou modules solaires sur une orientation dite indirecte ou diffuse qui ne correspond pas nécessairement à la direction du rayonnement solaire direct.

En outre, le capteur solaire peut être du type double face, c'est-à-dire avec une face supérieure productive faisant face au soleil et une face inférieure également productive faisant face au sol. La face inférieure reçoit le rayonnement solaire réfléchi par le sol, généralement appelé albédo. Ainsi, en fonction de l'albédo, il peut être préférable, pour obtenir un rendement maximal, d'orienter les suiveurs ou modules solaires sur une orientation dite indirecte qui ne correspond pas nécessairement à la direction du rayonnement solaire direct.

La présente invention a pour but de résoudre ces inconvénients en proposant un champ solaire, et un procédé de gestion associé, qui permettent d'asservir les modules solaires sur une consigne d'orientation commune qui prendra en compte, au moins partiellement, le rayonnement diffus et/ou l'albédo.

A cet effet, elle propose un champ solaire comprenant une pluralité de modules solaires répartis en plusieurs rangées parallèles, chaque module solaire comprenant au moins un capteur solaire, notamment du type panneau photovoltaïque, porté par un suiveur solaire mono-axe, où chaque suiveur solaire est piloté en rotation autour d'un axe principal au moyen d'un actionneur pour une rotation du module solaire permettant de suivre le soleil lors de son élévation et de sa descente d'est en ouest, ledit champ solaire comprenant en outre une unité de pilotage de l'orientation angulaire des modules solaires, ladite unité de pilotage étant reliée aux actionneurs pour asservir l'orientation angulaire des modules solaires en appliquant une consigne d'orientation commune à tous les modules solaires, ledit champ solaire étant remarquable en ce qu'il comprend une centrale solaire de référence comprenant au moins deux modules solaires de référence, dont un module solaire de référence central et au moins un module solaire de référence secondaire, où l'unité de pilotage est conformée pour :
- piloter l'orientation angulaire du module solaire de référence central selon une consigne d'orientation de référence dite centrale correspondant à une consigne d'orientation initiale,
- piloter l'orientation du ou de chaque module solaire de référence secondaire selon une consigne d'orientation de référence dite secondaire, ladite consigne d'orientation de référence secondaire correspondant à la consigne d'orientation initiale décalée d'un angle dit d'offset prédéfini non nul associé audit module solaire de référence secondaire, le module solaire de référence central étant ainsi associé à un angle d'offset nul ;
- recevoir une valeur de production d'énergie solaire de chaque module solaire de référence ;
- piloter l'orientation angulaire des modules solaires, à l'exception des modules solaires de référence, en appliquant comme consigne d'orientation commune la consigne d'orientation de référence associée au module solaire de référence présentant la plus grande valeur de production d'énergie solaire.

Ainsi, la centrale solaire de référence va permettre de tester une consigne d'orientation initiale (par exemple une consigne de suivi du rayonnement solaire direct) et au moins une consigne d'orientation de référence secondaire (avantageusement plusieurs consignes d'orientation de référence secondaires) décalée angulairement par rapport à la consigne d'orientation initiale d'un angle d'offset. La plupart du temps, c'est la consigne d'orientation initiale qui sera appliquée, mais en cas de nuage, et donc de rayonnement diffus, et/ou en cas d'albédo élevé, un décalage d'un angle d'offset peut s'avérer offrir une meilleure production d'énergie solaire, et donc la centrale solaire de référence va permettre de relever qu'une consigne d'orientation de référence secondaire associée à un angle d'offset est à privilégier, et donc l'unité de pilotage mettra en oeuvre un décalage de l'angle d'offset pour l'ensemble des modules solaires, à l'exception des modules solaires de référence. Plus il y a de modules solaires de référence secondaires, et plus il sera possible de tester différents angles d'offset.

Cette solution est particulièrement simple et peu coûteuse à mettre en oeuvre, tout en procurant une amélioration de la production d'énergie solaire globale du champ solaire, car elle prend en compte directement la production d'énergie solaire pour un ou plusieurs angles d'offset autour de la consigne d'orientation initiale.

Selon une caractéristique, la centrale solaire de référence comprend plusieurs modules solaires de référence secondaires associés chacun à un angle d'offset dédié.

Selon une autre caractéristique, la centrale solaire de référence comprend un nombre N de modules solaires de référence secondaire associés à des angles d'offset positifs et un nombre M de modules solaires de référence secondaire associés à des angles d'offset négatifs, où N et M sont des entiers.

Quatre configurations générales sont envisageables :
- si N=M≠0, alors la centrale solaire de référence comprend au moins une paire de modules solaires de référence secondaires associés respectivement à un angle d'offset positif et à un angle d'offset négatif.
- si N≠0 et M=0, alors la centrale solaire de référence comprend uniquement des modules solaires de référence secondaires associés à des angles d'offset positifs ;
- si N=0 et M≠0, alors la centrale solaire de référence comprend uniquement des modules solaires de référence secondaires associés à des angles d'offset négatifs ;
- si N≠0, M≠0 et N≠M, alors la centrale solaire de référence comprend un nombre différent de modules solaires de référence secondaires associés à des angles d'offset positifs que de modules solaires de référence secondaires associés à des angles d'offset négatifs.

Dans un mode de réalisation particulier, au moins un écart entre deux angles d'offset voisins est inférieur à 3 degrés en valeur absolue ; l'un de ces deux angles d'offset pouvant correspondre à l'angle d'offset nul du module solaire de référence central.

Autrement dit, le décalage angulaire entre les consignes d'orientation d'au moins deux modules solaire de référence voisins ne dépasse pas 3 degrés, ce qui est suffisant pour tester différents angles d'offset.

Il est à noter que l'écart entre deux angles d'offset voisins peut être constant ou bien au contraire ne pas être constant.

Selon une possibilité de l'invention, le champ solaire comprend, en entrée de l'unité de pilotage, une unité de calcul de la consigne d'orientation initiale en fonction d'un calcul astronomique de la position du soleil.

Il est également envisageable que l'unité de calcul soit conformée pour calculer la consigne d'orientation initiale en fonction de l'un au moins des paramètres suivants : orientations minimales et maximales accessibles pour les suiveurs solaires, ombrages des modules solaires d'une rangée sur les modules solaires d'une rangée adjacente.

Selon une autre possibilité de l'invention, l'unité de pilotage est conformée pour piloter l'orientation angulaire des modules solaires, à l'exception des modules solaires de référence, en appliquant comme consigne d'orientation commune la consigne d'orientation secondaire appliquée à un module solaire de référence secondaire présentant la plus grande valeur de production d'énergie solaire, seulement si ce module solaire de référence secondaire présente la plus grande valeur de production d'énergie solaire pendant une durée d'attente prédéfinie.

Ainsi, une attente est mise en place avant de basculer sur une consigne d'orientation secondaire, pour éviter de changer d'orientation plus ou mois souvent et plus ou moins vite. En effet, chaque changement d'orientation sollicite au moins un actionneur (généralement un moteur électrique), engendrant une consommation électrique et une usure des organes mécaniques sollicités par le changement d'orientation (paliers, éléments de guidage en rotation, ...). Ces consommations électriques et ces usures ne seront pas nécessairement compensées par les gains de productivité obtenus en se calant sur les consignes d'orientation secondaires.

L'invention se rapporte également à procédé de gestion d'un champ solaire conforme à l'invention, ce procédé comprenant les étapes suivantes réalisées de manière répétitive :
- calcul d'une consigne d'orientation initiale ;
- pilotage de l'orientation angulaire du module solaire de référence central selon une consigne d'orientation de référence dite centrale correspondant à la consigne d'orientation initiale ;
- pilotage de l'orientation du ou de chaque module solaire de référence secondaire selon une consigne d'orientation de référence dite secondaire, ladite consigne d'orientation de référence secondaire correspondant à la consigne d'orientation initiale décalée d'un angle dit d'offset prédéfini non nul associé audit module solaire de référence secondaire ;
- réception d'une valeur de production d'énergie solaire de chaque module solaire de référence ;
- pilotage de l'orientation angulaire des modules solaires, à l'exception des modules solaires de référence, en appliquant comme consigne d'orientation commune la consigne d'orientation de référence associée au module solaire de référence présentant la plus grande valeur de production d'énergie solaire.

Conformément à une caractéristique avantageuse de l'invention, si la plus grande valeur de production d'énergie solaire est associée à la consigne d'orientation de référence secondaire associée à un module solaire de référence secondaire, alors le procédé met en oeuvre le pilotage de l'orientation angulaire des modules solaires, à l'exception des modules solaires de référence, en appliquant comme consigne d'orientation commune ladite consigne d'orientation de référence secondaire, seulement si ce module solaire de référence secondaire présente la plus grande valeur de production d'énergie solaire pendant une durée d'attente prédéfinie.

Avantageusement, la durée d'attente est établie en fonction de l'un au moins des paramètres suivants :
- une consommation d'énergie nécessaire pour modifier l'orientation des modules solaires, à l'exception des modules solaires de référence, de l'angle d'offset associé au module solaire de référence secondaire présentant la plus grande valeur de production d'énergie solaire ;
- un taux d'usure d'organes mécaniques des suiveurs solaires des modules solaires, à l'exception des modules solaires de référence, sollicités lors d'un changement d'orientation de l'angle d'offset associé au module solaire de référence secondaire présentant la plus grande valeur de production d'énergie solaire.

La présente invention concerne également la caractéristique selon laquelle la consigne d'orientation initiale est calculée en fonction d'un calcul astronomique de la position du soleil.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique d'un champ solaire conforme à l'invention ;
- la figure 2 est une vue schématique en perspective de plusieurs rangées de modules solaires dans un champ solaire conforme à l'invention ;
- les figures 3 et 4 sont des vues schématiques en perspective de deux exemples de centrale solaire de référence ;
- la figure 5 est une représentation sous forme d'un schéma fonctionnel des étapes mises en oeuvre lors d'un procédé de gestion conforme à l'invention ; et
- la figure 6 est une représentation schématique d'une courbe de variation de la consigne d'orientation initiale en fonction du temps, à une date donnée.

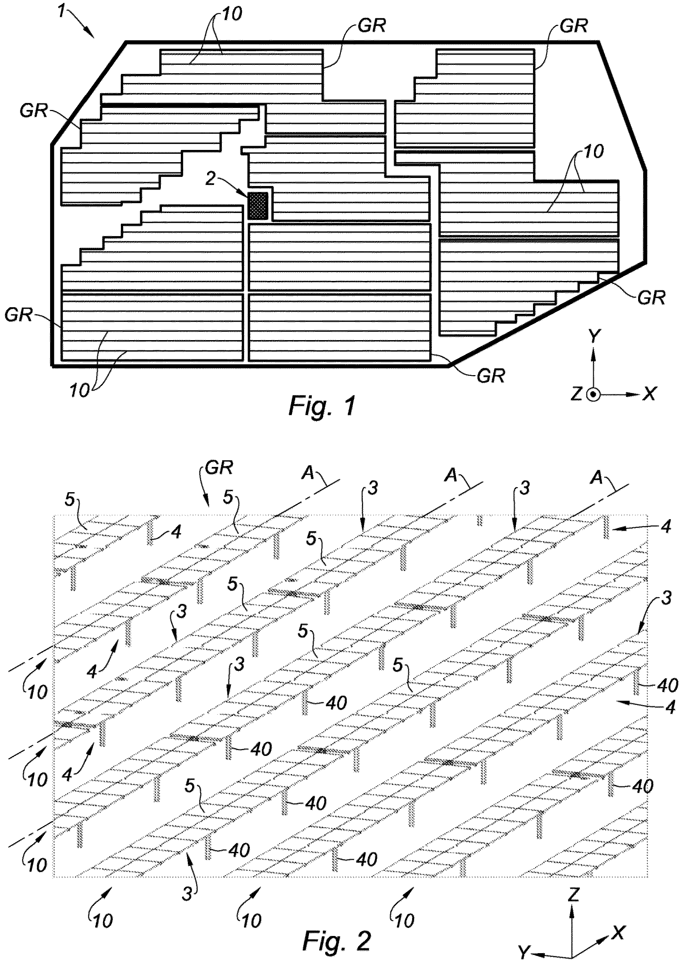

La figure 1 illustre un champ solaire 1 conforme à l'invention, comprenant plusieurs groupements GR de plusieurs rangées 10 de modules solaires (ces modules solaires étant non illustrés sur la figure 1 et visibles sur la figure 2), ces groupements GR et ces rangées 10 étant répartis et dimensionnés en fonction de la morphologie du terrain qui accueille le champ solaire 1. Le champ solaire 1 comporte également une centrale solaire de référence 2 décrite ultérieurement.

En référence à la figure 2, chaque rangée 10 comprend plusieurs modules solaires 3 alignés selon la direction nord-sud et disposés côte à côte au sein de la rangée 10.

Chaque module solaire 3 comprend un suiveur solaire 4 mono-axe orientable autour d'un axe principal A de rotation, du type comprenant :
- une structure fixe 40 d'ancrage au sol constituée par exemple d'un ou plusieurs pylônes ancrés au sol, par exemple par battage, vissage, boulonnage, lestage, ou autre moyen équivalent permettant de fixer et stabiliser au sol la structure fixe 40 ;
- une structure mobile (non visible), notamment du type plateforme composée d'un assemblage de poutres, longerons et/ou traverses, où la structure mobile est montée à rotation sur la structure fixe 40 selon l'axe principal A, et notamment montée à rotation sur les extrémités supérieures du ou des pylônes ;
- un système mécanique d'entraînement en rotation de la structure mobile selon l'axe principal A.

Chaque suiveur solaire 3 est piloté en rotation autour de son axe principal A au moyen d'un actionneur (non illustré) pour une rotation du module solaire 3 permettant de suivre le soleil lors de son élévation et de sa descente d'est en ouest. Cet actionneur peut être propre à chaque module solaire 3, ou peut être mis en commun entre plusieurs modules solaires 3, par exemple au sein d'une même rangée 10, voire de deux ou plus rangées 10.

Chaque module solaire 3 comprend en outre au moins un capteur solaire 5, et notamment un ou plusieurs panneaux photovoltaïques, supporté par ou monté sur la structure mobile du suiveur solaire 4. Pour la suite de la description, les capteurs solaires sont des panneaux photovoltaïques 5.

En référence à la figure 2, l'axe de rotation A est substantiellement horizontal et dirigé selon la direction nord-sud. Lorsque le suiveur solaire 1 est à l'horizontal ou à plat (comme visible sur la figure 2), le ou les panneaux photovoltaïques 5 sont à l'horizontale en s'étendant selon un plan horizontal défini par un axe longitudinal X (parallèle à l'axe principal A) selon la direction nord-sud et par un axe transversal Y selon la direction est-ouest, de manière orthogonale à un axe vertical Z.

Pour la suite de la description, l'orientation angulaire, autrement appelée angle d'inclinaison, d'un module solaire 3 (ou orientation angulaire du suiveur solaire 3 et du ou des panneaux photovoltaïques 5) correspond à l'angle de la normale au(x) panneau(x) photovoltaïque(s) 5 vis-à-vis de l'axe vertical Z pris dans un plan horizontal (X, Y). Ainsi, lorsque le suiveur solaire 1 est à l'horizontal ou à plat (comme schématisé sur la figure 2), cette orientation angulaire est de 0 degré.

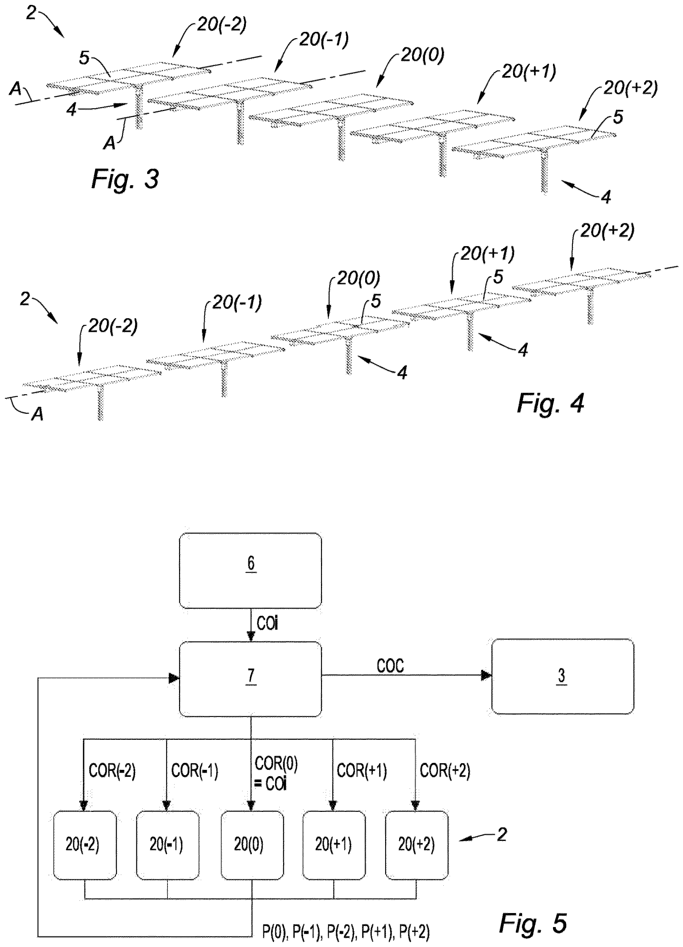

En référence à la figure 5, le champ solaire 1 comprend en outre une unité de calcul 6 propre à calculer une consigne d'orientation initiale COI en fonction d'un calcul astronomique de la position du soleil.

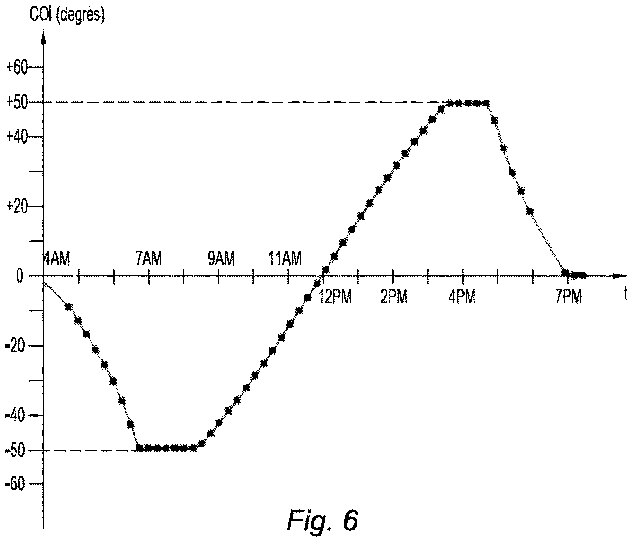

La figure 6 illustre un exemple de variation de la consigne d'orientation initiale COI en fonction du temps t, à une date donnée, sur une amplitude horaire d'une journée prise entre 4 heures du matin (4 AM) et sept heures du soir (7 PM). Il est à noter que cette variation présente des paliers à - 50 degrés en matinée et à + 50 degrés en après-midi, correspondant aux orientations maximales et minimales du module solaire 3, car la rotation du module solaire 3 est limitée pour des raisons mécaniques.

Cette consigne d'orientation initiale COI peut également être calculée en fonction d'autres paramètres, comme par exemple une optimisation prenant en compte les phénomènes d'ombrage des modules solaires 3 d'une rangée 10 sur les modules solaires 3 d'une rangée 10 adjacente.

En référence à la figure 5, le champ solaire 1 comprend également une unité de pilotage 7 propre à piloter l'orientation angulaire des modules solaires 3 des rangées 10 des groupements GR, cette unité de pilotage 7 étant reliée aux actionneurs de ces modules solaires 3 pour asservir leurs orientations angulaires en appliquant une consigne d'orientation commune COC à tous ces modules solaires 3.

Cette unité de pilotage 7 est reliée en entrée à l'unité de calcul 6 afin de recevoir comme donnée d'entrée la consigne d'orientation initiale COI et est reliée en sortie à ces modules solaires 3 (et plus spécifiquement à leurs actionneurs) afin de délivrer en sortie la consigne d'orientation commune COC qui sera appliquée à tous les modules solaires 3.

Cette unité de pilotage 7 est également raccordée à la centrale solaire de référence 2 pour établir cette consigne d'orientation commune COC en fonction de la consigne d'orientation initiale COI et également en fonction d'une réponse de cette centrale solaire de référence 2.

En référence aux figures 3 et 4, la centrale solaire de référence 2 comprend plusieurs modules solaires de référence 20(i) (i entier relatif), dont un module solaire de référence central 20(0) et plusieurs modules solaires de référence secondaires 20(j) (j entier relatif non nul). Dans l'exemple des figures 3 à 5, la centrale solaire de référence 2 comprend deux paires de modules solaires de référence secondaires, à savoir une première paire de modules solaires de référence secondaires 21(+1), 21(-1), et une seconde paire de modules solaires de référence secondaires 21 (+2), 21 (-2).

Les modules solaires de référence 20(i) sont du même type que les modules solaires 3 décrits précédemment, mais ils peuvent éventuellement présenter des dimensions différentes. Les modules solaires de référence 20(i) comprennent ainsi un support suiveur 4 mobile en rotation selon un axe principal A et supportant au moins un capteur solaire 5 de la même technologie que les capteurs solaires 5 des modules solaires 3.

Au sein de la centrale solaire de référence 2, ces modules solaires de référence 20(i) peuvent par exemple être alignés orthogonalement à leurs axes principaux A de rotation (comme visible sur la figure 3), ou bien être alignés selon leurs axes principaux A de rotation.

L'unité de pilotage 7 est conformée pour :
- piloter l'orientation angulaire du module solaire de référence central 20(0) selon une consigne d'orientation de référence dite centrale COR(0) correspondant à la consigne d'orientation initiale COI (autrement dit COR(0) = COI et angle d'offset associé OFF(0) nul) ;
- piloter l'orientation de chaque module solaire de référence secondaire 20(j) selon une consigne d'orientation de référence secondaire COR(j) associée, cette consigne d'orientation de référence secondaire COS(j) correspondant à la consigne d'orientation initiale COI décalée d'un angle dit d'offset OFF(j) prédéfini associé au module solaire de référence secondaire 20(j) (autrement dit COR(j) = COI + OFF(j)).

Ainsi, l'unité de pilotage 7 pilote l'orientation angulaire du module solaire de référence central 20(0) de sorte qu'il suive la courbe de la consigne d'orientation initiale COI. De plus, l'unité de pilotage 7 pilote l'orientation angulaire de chaque module solaire de référence secondaire 20(j) de sorte qu'il suive la courbe de la consigne d'orientation initiale COI décalée de l'angle d'offset OFF(j) dédié au module solaire de référence secondaire 20(j).

Pour chaque paire de modules solaires de référence secondaires 21(+1), 21(-1) (respectivement 21(+2), 21(-2)), un module de référence secondaire 21(+1) (respectivement 21(+2)) est associé à un angle d'offset OFF(+1) (respectivement OFF(+2)) positif et l'autre module de référence secondaire 21(-1) (respectivement 21(-2)) est associé à un angle d'offset OFF(-1) (respectivement OFF(-2)) négatif. De plus, OFF(-1) et OFF(+1) (respectivement OFF(-2) et OFF(+2)) sont égaux en valeur absolue.

De manière générale, j=+k ou -k (ou k entier positif), et OFF(+k) = + Ak et OFF(-k) = - Ak, où Ak angle positif. Autrement dit, l'angle d'offset positif (+Ak) et l'angle d'offset négatif (-Ak) de chaque paire de modules solaires de référence secondaires 20(+k), 20(-k) sont égaux en valeur absolue.

Il est à noter que plus j est élevé en valeur absolue (autrement dit plus k est grand), et plus l'angle d'offset OFF(i) (autrement dit OFF(+k) ou OFF(-k)) est grand en valeur absolue.

De plus, les angles d'offset de plus petite valeur absolue, c'est-à-dire les angles d'offset OFF(+1) et OFF(-1), sont inférieurs ou égaux à 3 degrés en valeur absolue. Autrement dit, |OFF(+1)| = |OFF(-1)| = A1 ≤ 3 degrés.

De plus, l'écart entre deux angles d'offset voisins est inférieur ou égal à 3 degrés en valeur absolue. Autrement dit, |OFF(i) - OFF(i+1)| ≤ 3 degrés et |OFF(i) - OFF(i-1)| ≤ 3 degrés.

Il est envisageable que |OFF(i) - OFF(i+1)| = |OFF(i) - OFF(i-1)| = PA. Autrement dit, le pas PA est constant entre les angles d'offset, de sorte que OFF(i) = i.PA, avec un angle d'offset OFF(0) nul pour le module solaire de référence central 20(0) (où i=0). Ce pas PA est positif, non nul et inférieur ou égal à 3 degrés. Donc, OFF(+1) = PA, OFF(-1) = - PA, OFF(+2) = 2PA et enfin OFF(-2) = -2PA. Ainsi, on a la relation générale suivante : COR(i) = COI + i.PA.

Il est bien entendu envisageable que l'écart entre deux angles d'offset OFF(i) voisins varie, autrement dit le pas peut ne pas être constant.

Il est aussi envisageable d'avoir plus de modules solaires de référence secondaires 21(j) associés à des angles d'offset OFF(j) positifs, ou inversement avoir plus de modules solaires de référence secondaires 21(j) associés à des angles d'offset OFF(j) négatifs. Autrement dit, il est envisageable que la centrale solaire de référence 2 comprenne :
- des modules solaires de référence secondaire 20(j) associés uniquement à des angles d'offset OFF(j) positifs ; ou
- des modules solaires de référence secondaire 20(j) associés uniquement à des angles d'offset OFF(j) négatifs ; ou
- P1 modules solaires de référence secondaire 20(j) associés à des angles d'offset OFF(j) positifs et P2 modules solaires de référence secondaire 20(j) associés à des angles d'offset OFF(j) négatifs, où P1 et P2 sont des entiers non nuls et P1 différent de P2 (P1 peut être supérieur ou inférieur à P2).

Le nombre de modules solaires de référence secondaires 21(j) et le choix de leurs angles d'offset OFF(j) (pas, signes, valeurs) dépend notamment du site d'accueil du champ solaire 1 (configuration, environnement tel que présence de collines, montagnes, étendues d'eau, etc.) et de la technologie des capteurs solaires 5.

Ensuite, l'unité de pilotage 7 met en oeuvre les étapes suivantes :
- recevoir une valeur de production d'énergie solaire P(i) de chaque module solaire de référence 20(i) ;
- adresser aux modules solaires 3 (à l'exception des modules solaires de référence 20(i)), comme consigne d'orientation commune COC, la consigne d'orientation de référence COR(i) associée au module solaire de référence 20(i) présentant la plus grande valeur de production d'énergie solaire P(i).

Ainsi, l'unité de pilotage 7 pilote l'orientation angulaire des modules solaires 3 en appliquant comme consigne d'orientation commune la consigne d'orientation de référence COR(i) associée au module solaire de référence 20(i) présentant la plus grande valeur de production d'énergie solaire P(i). Autrement dit, COC = COR(m)= COI + m.PA où P(m) correspond au maximum des P(i).

Si la plus grande valeur de production d'énergie solaire est associée à la consigne d'orientation de référence secondaire COR(j) associée à un module solaire de référence secondaire 20(j), alors l'unité de pilotage 7 met en oeuvre le pilotage de l'orientation angulaire des modules solaires 3 en appliquant comme consigne d'orientation commune COC ladite consigne d'orientation de référence secondaire COR(j), seulement si ce module solaire de référence secondaire 20(j) présente la plus grande valeur de production d'énergie solaire P(j) pendant une durée d'attente DAT prédéfinie.

Cette durée d'attente DAT est établie en fonction de l'un au moins des paramètres suivants :
- une consommation d'énergie nécessaire pour modifier l'orientation des modules solaires 3, à l'exception des modules solaires de référence 20(i), de l'angle d'offset OFF(j) associé au module solaire de référence secondaire 20(j) présentant la plus grande valeur de production d'énergie solaire P(j) ;
- un taux d'usure d'organes mécaniques des suiveurs solaires 4 des modules solaires 3, à l'exception des modules solaires de référence 20(i), sollicités lors d'un changement d'orientation de l'angle d'offset OFF(j) associé au module solaire de référence secondaire 20(j) présentant la plus grande valeur de production d'énergie solaire P(j).

Ainsi, en particulier en cas de rayonnement diffus et/ou d'albédo si les panneaux photovoltaïques sont du type double face, la central solaire de référence 2 permet de détecter qu'un angle d'offset OFF(j) appliqué par rapport à la consigne d'orientation initiale COI, procurera un accroissement dans la production d'énergie solaire, et l'unité de pilotage 7 reportera cet angle d'offset OFF(j) à l'ensemble des modules solaires 3 afin d'augmenter la production électrique du champ solaire 1.

Bien entendu l'exemple de mise en oeuvre évoqué ci-dessus ne présente aucun caractère limitatif et d'autres améliorations et détails peuvent être apportés au champ solaire selon l'invention, sans pour autant sortir du cadre de l'invention où d'autres formes de modules solaires et/ou de capteurs solaires peuvent par exemple être réalisées.

En outre, les aspects suivants sont exposés:
Selon un premier aspect indépendant, l'invention propose un champ solaire (1) comprenant une pluralité de modules solaires (3) répartis en plusieurs rangées (10) parallèles, chaque module solaire (3) comprenant au moins un capteur solaire (5), notamment du type panneau photovoltaïque, porté par un suiveur solaire (4) mono-axe, où chaque suiveur solaire (4) est piloté en rotation autour d'un axe principal (A) au moyen d'un actionneur pour une rotation du module solaire (3) permettant de suivre le soleil lors de son élévation et de sa descente d'est en ouest, ledit champ solaire (1) comprenant en outre une unité de pilotage (7) de l'orientation angulaire des modules solaires (3), ladite unité de pilotage (7) étant reliée aux actionneurs pour asservir l'orientation angulaire des modules solaires (3) en appliquant une consigne d'orientation commune (COC) à tous les modules solaires (3), ledit champ solaire (1) étant caractérisé en ce qu'il comprend une centrale solaire de référence (2) comprenant au moins deux modules solaires de référence (20(i)), dont un module solaire de référence central (20(0)) et au moins un module solaire de référence secondaire (20(j)), où l'unité de pilotage (7) est conformée pour :
- piloter l'orientation angulaire du module solaire de référence central (20(0)) selon une consigne d'orientation de référence dite centrale (COR(0)) correspondant à une consigne d'orientation initiale (COI),
- piloter l'orientation du ou de chaque module solaire de référence secondaire (20(j)) selon une consigne d'orientation de référence dite secondaire (COR(j)), ladite consigne d'orientation de référence secondaire (COR(j)) correspondant à la consigne d'orientation initiale (COI) décalée d'un angle dit d'offset (OFF(j)) prédéfini non nul associé audit module solaire de référence secondaire (20(j)), le module solaire de référence central (20(0)) étant ainsi associé à un angle d'offset (OFF(0)) nul ;
- recevoir une valeur de production d'énergie solaire (P(i)) de chaque module solaire de référence (20(i)) ;
- piloter l'orientation angulaire des modules solaires (3), à l'exception des modules solaires de référence (20(i)), en appliquant comme consigne d'orientation commune (COC) la consigne d'orientation de référence (COR(i) ; COR(0), COR(j)) associée au module solaire de référence (20(i)) présentant la plus grande valeur de production d'énergie solaire (P(i)).

Selon un autre aspect, la centrale solaire de référence comprend plusieurs modules solaires de référence secondaires (20(j)) associés chacun à un angle d'offset (OFF(j)) dédié.

Selon un autre aspect, la centrale solaire de référence (2) comprend un nombre N de modules solaires de référence secondaire (20(j)) associés à des angles d'offset (OFF(j)) positifs et un nombre M de modules solaires de référence secondaire (20(j)) associés à des angles d'offset OFF(j) négatifs, où N et M sont des entiers.

Selon un autre aspect, l'écart (PA) entre deux angles d'offset (OFF(i)) voisins est inférieur ou égal à 3 degrés en valeur absolue.

Selon un autre aspect, le champ solaire (1) comprend en entrée de l'unité de pilotage (7), une unité de calcul (6) de la consigne d'orientation initiale (COI) en fonction d'un calcul astronomique de la position du soleil.

Selon un autre aspect, l'unité de calcul (6) est conformée pour calculer la consigne d'orientation initiale (COI) en fonction de l'un au moins des paramètres suivants : orientations minimales et maximales accessibles pour les suiveurs solaires, ombrages des modules solaires d'une rangée sur les modules solaires d'une rangée adjacente.

Selon un autre aspect, l'unité de pilotage (7) est conformée pour piloter l'orientation angulaire des modules solaires (3), à l'exception des modules solaires de référence (20(i)), en appliquant comme consigne d'orientation commune (COC) la consigne d'orientation secondaire (COR(j)) appliquée à un module solaire de référence secondaire (20(j)) présentant la plus grande valeur de production d'énergie solaire (P(j)), seulement si ce module solaire de référence secondaire (20(j)) présente la plus grande valeur de production d'énergie solaire (P(j)) pendant une durée d'attente (DAT) prédéfinie.

Selon un autre aspect, l'invention propose un procédé de gestion d'un champ solaire (1) conforme selon l'un des aspects précédents, ledit procédé comprenant les étapes suivantes réalisées de manière répétitive :
- calcul d'une consigne d'orientation initiale (COI) ;
- pilotage de l'orientation angulaire du module solaire de référence central (20(0)) selon une consigne d'orientation de référence dite centrale (COR(0)) correspondant à la consigne d'orientation initiale (COI) ;
- pilotage de l'orientation du ou de chaque module solaire de référence secondaire (20(j)) selon une consigne d'orientation de référence dite secondaire (COR(j)), ladite consigne d'orientation de référence secondaire (COR(j)) correspondant à la consigne d'orientation initiale (COI) décalée d'un angle dit d'offset (OFF(j)) prédéfini non nul associé audit module solaire de référence secondaire (20(j)) ;
- réception d'une valeur de production d'énergie solaire (P(i)) de chaque module solaire de référence (20(i)) ;
- pilotage de l'orientation angulaire des modules solaires (3), à l'exception des modules solaires de référence (20(i)), en appliquant comme consigne d'orientation commune (COC) la consigne d'orientation de référence (COR(i) ; COR(0), COR(j)) associée au module solaire de référence (20(i)) présentant la plus grande valeur de production d'énergie solaire (P(i)).

Selon un autre aspect du procédé, si la plus grande valeur de production d'énergie solaire (P(j)) est associée à la consigne d'orientation de référence secondaire (COR(j)) associée à un module solaire de référence secondaire (20(j)), alors le procédé met en oeuvre le pilotage de l'orientation angulaire des modules solaires (3), à l'exception des modules solaires de référence (20(i)), en appliquant comme consigne d'orientation commune (COC) ladite consigne d'orientation de référence secondaire (COR(j)), seulement si ce module solaire de référence secondaire (20(j)) présente la plus grande valeur de production d'énergie solaire (P(j)) pendant une durée d'attente prédéfinie.

Selon un autre aspect du procédé, la durée d'attente est établie en fonction de l'un au moins des paramètres suivants:
- une consommation d'énergie nécessaire pour modifier l'orientation des modules solaires (3), à l'exception des modules solaires de référence (20(i)), de l'angle d'offset (OFF(j)) associé au module solaire de référence secondaire (20(j)) présentant la plus grande valeur de production d'énergie solaire (P(j)) ;
- un taux d'usure d'organes mécaniques des suiveurs solaires des modules solaires (3), à l'exception des modules solaires de référence (20(i)), sollicités lors d'un changement d'orientation de l'angle d'offset (OFF(j)) associé au module solaire de référence secondaire (20(j)) présentant la plus grande valeur de production d'énergie solaire (P(j)).

Selon un autre aspect du procédé, la consigne d'orientation initiale (COI) est calculée en fonction d'un calcul astronomique de la position du soleil.

## Revendications

1. Procédé de gestion d'un champ solaire (1) comprenant des modules solaires (3) portés par des suiveurs solaires mono-axe et répartis en rangées parallèles, le procédé comprenant :
- calcul d'une consigne d'orientation initiale (COI) ;
- pilotage d'une orientation angulaire d'un module solaire de référence primaire (20(0)) selon une consigne d'orientation de référence dite première (COR(0)) correspondant à la consigne d'orientation initiale (COI) ;
- pilotage d'une orientation angulaire d'un module solaire de référence secondaire (20(j)) selon une consigne d'orientation de référence dite secondaire (COR(j)) correspondant à la consigne d'orientation initiale (COI) décalée d'un angle dit d'offset (OFF(j)) non nul associé au module solaire de référence secondaire (20(j)) ;
- réception d'une valeur de production d'énergie solaire (P(i)) de chacun des modules solaires de référence primaire (20(0)) et secondaire (20(j)) ;
- pilotage d'orientations angulaires des modules solaires (3), à l'exception des modules solaires de référence primaire et secondaire (20(0), 20(j)), selon une consigne d'orientation de référence associée au module solaire de référence des modules solaires de référence primaire et secondaire (20(0), 20(j)) présente la plus grande valeur de production d'énergie solaire (P(j)).

2. Procédé de gestion selon la revendication 1, dans lequel, si le module solaire de référence secondaire (20(j)) présente la plus grande valeur de production d'énergie solaire (P(j)) pendant une durée d'attente prédéfinie, les consignes d'orientation des modules solaires (3), à l'exception des modules solaires de référence primaire et secondaire (20(0), 20(j)), sont pilotés selon la consigne d'orientation de référence secondaire (COR(j)).

3. Procédé de gestion selon la revendication 2, dans lequel la durée d'attente prédéfinie est établie en fonction d'une consommation d'énergie nécessaire pour modifier l'orientation des modules solaires (3), à l'exception des modules solaires de référence primaire et secondaire (20(0), 20(j)).

4. Procédé de gestion selon la revendication 2, dans lequel la durée d'attente prédéfinie est établie en fonction d'un taux d'usure d'organes mécaniques des suiveurs solaires mono-axe des modules solaires (3), à l'exception des modules solaires de référence primaire et secondaire (20(0), 20(j)).

5. Procédé de gestion selon la revendication 1, dans lequel
calcul d'une position astronomique du soleil ; et
calcul de la consigne d'orientation initiale (COI) en fonction de la position astronomique du soleil.

## Patentansprüche

1. Verfahren zum Verwalten eines Solarfeldes (1), das Solarmodule (3) umfasst, die von einachsigen Solartrackern getragen werden und in parallelen Reihen angeordnet sind, wobei das Verfahren umfasst:
- Berechnen eines anfänglichen Orientierungssollwerts (COI);
- Steuern einer Winkelorientierung eines ersten Referenzsolarmoduls (20(0)) gemäß einem ersten Referenzorientierungssollwert (COR(0)), der dem anfänglichen Orientierungssollwert (COI) entspricht;
- Steuern einer Winkelorientierung eines zweiten Referenzsolarmoduls (20(j)) gemäß einem zweiten Referenzorientierungssollwert (COR(j)), der dem anfänglichen Orientierungssollwert (COI), verschoben um einen von Null verschiedenen Offsetwinkel (OFF(j)), der dem zweiten Referenzsolarmodul (20(j)) zugeordnet ist, entspricht;
- Empfangen eines Solarenergieproduktionswertes (P(i)) von jedem der ersten (20(0)) und zweiten (20(j)) Referenzsolarmodule;
- Steuern der Winkelorientierungen der Solarmodule (3), die nicht das erste und zweite Referenzsolarmodul (20(0), 20(j)) sind, gemäß einem Referenzorientierungssollwert, der einem Referenzsolarmodul der ersten und zweiten Referenzsolarmodule (20(0), 20(j)) mit dem höchsten Solarenergieproduktionswert (P(j)) zugeordnet ist.

2. Verfahren zum Verwalten nach Anspruch 1, wobei, wenn das zweite Referenzsolarmodul (20(j)) den höchsten Solarenergieproduktionswert (P(j)) für eine vorbestimmte Wartezeit aufweist, die Winkelorientierungen der Solarmodule (3), die nicht das erste und zweite Referenzsolarmodul (20(0), 20(j)) sind, gemäß dem zweiten Referenzorientierungssollwert (COR(j)) gesteuert werden.

3. Verfahren zum Verwalten nach Anspruch 2, wobei die vorbestimmte Wartezeit auf einem Energieverbrauch basiert, der erforderlich ist, um die Winkelorientierungen der Solarmodule (3) zu modifizieren, die nicht das erste und zweite Referenzsolarmodul (20(0), 20(j)) sind.

4. Verfahren zum Verwalten nach Anspruch 2, wobei die vorbestimmte Wartezeit auf einer Verschleißrate von mechanischen Elementen der einachsigen Solartracker der Solarmodule (3) basiert, die nicht das erste und zweite Referenzsolarmodul (20(0), 20(j)) sind.

5. Verfahren zum Verwalten nach Anspruch 1, wobei:
Berechnen einer astronomischen Position der Sonne; und
Berechnen des anfänglichen Orientierungssollwerts (COI) auf Basis der astronomischen Position der Sonne.

## Claims

1. A method for managing a solar array (1) comprising solar modules (3) supported by single-axis solar trackers and arranged in parallel rows, the method comprising:
- calculating an initial orientation setpoint (COI);
- controlling an angular orientation of a first reference solar module (20(0)) according to a first reference orientation setpoint (COR(0)) corresponding to the initial orientation setpoint (COI);
- controlling an angular orientation of a second reference solar module (20(j)) according to a second reference orientation setpoint (COR(j)) corresponding to the initial orientation setpoint (COI) shifted by a non-zero offset angle (OFF(j)) associated with the second reference solar module (20(j));
- receiving a solar energy production value (P(i)) from each of the first (20(0)) and second (20(j)) reference solar modules;
- controlling angular orientations of the solar modules (3) other than the first and second reference solar modules (20(0), 20(j)) according to a reference orientation setpoint associated with a reference solar module of the first and second reference solar modules (20(0), 20(j)) having the highest solar energy production value (P(j)).

2. The method for managing according to claim 1, wherein, if the second reference solar module (20(j)) has the highest solar energy production value (P(j)) for a predefined waiting time, the angular orientations of the solar modules (3) other than the first and second reference solar modules (20(0), 20(j)) are controlled according to the second reference orientation setpoint (COR(j)).

3. The method for managing according to claim 2, wherein the predefined waiting time is based on an energy consumption needed to modify the angular orientations of the solar modules (3) other than the first and second reference solar modules (20(0), 20(j)).

4. The method for managing according to claim 2, wherein the predefined waiting time is based on a wear rate of mechanical members of the single-axis solar trackers of the solar modules (3) other than the first and second reference solar modules (20(0), 20(j)).

5. The method for managing according to claim 1, wherein:
calculating an astronomical position of the Sun; and
calculating the initial orientation setpoint (COI) based on the astronomical position of the Sun.
